(19) Europäisches Patentamt
European Patent Office
Office européen des brevets

(11) **EP 4 640 926 A1**

(12) **EUROPEAN PATENT APPLICATION**
published in accordance with Art. 153(4) EPC

(43) Date of publication:
**29.10.2025   Bulletin 2025/44**

(21) Application number: **23907442.0**

(22) Date of filing: **20.11.2023**

(51) International Patent Classification (IPC):
*C25D 1/04* (2006.01)        *C25D 3/38* (2006.01)
*C23C 28/00* (2006.01)      *H01M 4/66* (2006.01)
*H01M 10/052* (2010.01)   *C25D 17/12* (2006.01)
*C23F 11/18* (2006.01)

(52) Cooperative Patent Classification (CPC):
**C23C 28/00; C23F 11/18; C25D 1/04; C25D 3/38; C25D 17/12; H01M 4/66; H01M 10/052;** Y02E 60/10

(86) International application number:
**PCT/KR2023/018615**

(87) International publication number:
**WO 2024/136156 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022   KR 20220181691**
**27.12.2022   KR 20220185255**
**05.10.2023   KR 20230132909**
**05.10.2023   KR 20230132912**

(71) Applicant: **SK Nexilis Co., Ltd.**
**Jeollabuk-do 56137 (KR)**

(72) Inventors:
• **JIN, Shan Hua**
**Jeongeup-si, Jeollabuk-do 56137 (KR)**
• **YOON, Min Seok**
**Jeongeup-si, Jeollabuk-do 56137 (KR)**

(74) Representative: **Prüfer & Partner mbB**
**Patentanwälte · Rechtsanwälte**
**Sohnckestraße 12**
**81479 München (DE)**

(54) **COPPER FOIL CAPABLE OF PREVENTING TEAR OR WRINKLE DEFECTS, ELECTRODE COMPRISING SAME, SECONDARY BATTERY COMPRISING SAME, AND MANUFACTURING METHOD THEREFOR**

(57)     Provided in one embodiment of the present invention is a copper foil comprising a copper film, which comrpises 99.9 wt% or more of copper, wherein the copper film has an A-value of 1.1-1.6. A is calculated by the following relation 1, [Relation 1] A=P/Q, P in relation 1 is the peak intensity at 1650 cm$^{-1}$, of the copper film, Q in relation 1 is the peak intensity at 1460 cm$^{-1}$, of the copper film, and the peak intensities are measured by FT-IR. Provided in one embodiment of the present invention is the copper foil and a manufacturing method therefor, the copper foil comprising a copper film, which comprises 99.9 wt% or more of copper and has a first stress coefficient of 2.8-3.2, a second stress coefficient of 2.5-3.0 and a third stress coefficient of 3.5-4.5. The first stress coefficient is calculated by relation 2, [relation 2] first stress coefficient $=A/A'+B/B'+C/C'$. The second stress coefficient is calculated by relation 3, [relation 3] second stress coefficient $= A/B+A'/B'$. The third stress coefficient is calculated by relation 4, [relation 4] third stress coefficient $= A/C+A'/C'$, A in relation 2 is stress at 50% elongation in MD, A' in relation 2 is stress at 50% elongation in TD, B in relation 2 is stress at 10% elongation in MD, B' in relation 2 is stress at 10% elongation in TD, C in relation 2 is stress at 5% elongation in MD, and C' in relation 2 is stress at 5% elongation in TD. In addition, provided in another embodiment of the present invention is an electrode comprising the copper foil, and a secondary battery comprising same.

FIG. 1

110

112
111

**Description**

[**Technical field**]

The present disclosure relates to a copper foil capable of preventing tear or wrinkle defects therein, an electrode including the same, a secondary battery including the same, and a method for manufacturing the same.

[**Background Art**]

Secondary batteries are types of energy conversion devices that convert electrical energy into chemical energy, store the chemical energy therein, and then convert the chemical energy back to electrical energy when electricity is needed, thereby generating electricity. The secondary batteries are used as energy sources for electric vehicles as well as portable home appliances such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel-hydrogen secondary batteries, and lithium secondary batteries.

In particular, lithium secondary batteries may store a relatively large amount of energy relative to their size and weight compared with other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used through one cycle of charging and discharging. When a certain device is operated with a fully charged lithium secondary battery, the lithium secondary battery should have a high charge/discharge capacity in order to increase the operating time of the device. Accordingly, research to satisfy ever-increasing expectations (needs) of consumers regarding the charge/discharge capacity of a lithium secondary battery is continuously required.

Such a secondary battery includes an anode current collector made of a copper foil, and among copper foils, an electrolytic copper foil is widely used as the anode current collector of the secondary battery. Along with an increase in demand for secondary batteries, as the demand for high-capacity, high-efficiency, and high-quality secondary batteries increases, an electrolytic copper foil capable of improving the characteristics of secondary batteries is required. In particular, an electrolytic copper foil capable of securing a high capacity and stable capacity retention of the secondary battery is required.

As a thickness of the electrolytic copper foil used as an anode current collector of a secondary battery decreases, an amount of an active material that can be included increases. However, when the thickness of the copper foil decreases, the strength of the copper foil is reduced accordingly, and thus handling is not easy and the possibility of breaking is increased. Thus, in the case of ultra-thin, tensile strength properties become more important. In addition, in the case of metal-based and composite-based active materials, which have recently been attracting attention for high-capacity applications, volume expansion may occur severely, and thus, a high-strength electrolytic copper foil that can cope with this is required.

Meanwhile, as the copper foil becomes thinner, the amount of active material that can be included in the same space may be increased, and the number of current collectors may be increased, and thus the capacity of secondary batteries can be increased. However, as the copper foil becomes thinner, curling occurs, and thus, when the copper foil is wound, defects such as tears or wrinkles in the copper foil occur due to the curling of an edge, and accordingly, there is difficulty in manufacturing copper foils in the form of a very thin film. Accordingly, in order to manufacture a copper foil having a very thin thickness, the curling of the copper foil should be prevented.

[**Disclosure**]

[**Technical Problem**]

Accordingly, the present disclosure relates to a copper foil capable of preventing the problems caused by the limitations and disadvantages of the related art described above, an electrode including the same, a secondary battery including the same, and a method for manufacturing the same.

According to one embodiment of the present disclosure, there is provided a copper foil having high-strength properties by having an A-value in a range of 1.1 to 1.6.

According to one embodiment of the present disclosure, there is provided a copper foil that does not curl, wrinkle, or tear during a manufacturing process by having an A-value in a range of 1.1 to 1.6.

According to one embodiment of the present disclosure, there is provided a copper foil that is not wrinkled or torn by having a first stress factor value in a range of 2.8 to 3.2.

According to one embodiment of the present disclosure, there is provided a copper foil that is not wrinkled or torn by having a second stress factor value in a range of 2.5 to 3.0.

According to one embodiment of the present disclosure, there is provided a copper foil that is not wrinkled or torn by having a third stress factor value in a range of 3.5 to 4.5.

According to another embodiment of the present disclosure, there is provided an electrode for a secondary battery including the copper foil, and a secondary battery including the electrode for a secondary battery.

According to still another embodiment of the present disclosure, there is provided a method for manufacturing a copper foil in which the occurrence of curls, wrinkles, or tears is prevented.

In addition to the aspects of the present disclosure described above, other features and advantages of the present disclosure will be described in the following detailed description, or may be clearly understood by those skilled in the art to which the present disclosure pertains from such description.

[Technical Solution]

According to one embodiment of the present disclosure, there is provided a copper foil including a copper film including 99.9 wt% or more of copper, wherein the copper film has an A-value in a range of 1.1 to 1.6. "A" is calculated by Equation 1 below, [Equation 1] A=P/Q wherein "P" in Equation 1 is a peak intensity at 1650 cm$^{-1}$ of the copper film, "Q" in Equation 1 is a peak intensity at 1460 cm$^{-1}$ of the copper film, and the peak intensity is measured by Fourier-transform infrared spectroscopy (FT-IR).

According to one embodiment of the present disclosure, there is provided a copper foil including a copper film including 99.9 wt% or more of copper, wherein the copper foil has a first stress factor in a range of 2.8 to 3.2, a second stress factor in a range of 2.5 to 3.0, and a third stress factor in a range of 3.5 to 4.5. The first stress factor is calculated by Equation 1, [Equation 1] first stress factor=A/A'+B/B'+C/C', the second stress factor is calculated by Equation 2, [Equation 2] second stress factor=A/B+A'/B', and the third stress factor is calculated by Equation 3 below, [Equation 3] third stress factor=-A/C+A'/C', wherein A in Equation 1 is a stress at 50% elongation in a machine direction (MD direction), A' in Equation 1 is a stress at 50% elongation in a transverse direction (TD direction), B in Equation 1 is a stress at 10% elongation in the MD direction, B' in Equation 1 is a stress at 10% elongation in the TD direction, C in Equation 1 is a stress at 5% elongation in the MD direction, and C' in Equation 1 is a stress at 5% elongation in the TD direction.

According to another embodiment of the present disclosure, there is provided a method for manufacturing a copper foil, the method including preparing an electrolyte containing copper ions, forming a copper film, and forming a protective layer on the copper film, wherein the forming of the copper film includes forming the copper film on a rotating anode drum by electrically connecting a cathode plate and the rotating anode drum, which are disposed to be spaced apart from each other in an electrolyte in an electrolytic bath, wherein the electrolyte includes copper ions at a concentration of 70 g/L to 100 g/L, sulfuric acid at a concentration of 70 g/L to 150 g/L, chlorine (Cl) at a concentration of 15 ppm to 25 ppm, nickel (Ni) at a concentration of 15 ppm to 150 ppm, lead ions (Pb$^{2+}$) at a concentration of 1 ppm to 20 ppm, hydrogen peroxide at a concentration of 1 ml/L to 10 ml/L, tungsten (W) at a concentration of 0.3 ppm to 5 ppm, and an organic additive, wherein the organic additive includes at least one of a polishing agent (component A), a moderator (component B), a leveling agent (component C), and an mitigation agent (component D), wherein the polishing agent (component A) includes sulfonic acid or a metal salt thereof, the moderator (component B) includes a non-ionic water-soluble polymer, the leveling agent (component C) includes at least one of nitrogen (N) and sulfur (S), and the mitigation agent (component D) includes citric acid.

According to still another embodiment of the present disclosure, there is provided an electrode for a secondary battery, the electrode including a copper foil and an active material layer disposed on at least one surface of the copper foil.

According to yet another embodiment of the present disclosure, there is provided a secondary battery including a cathode configured to provide lithium ions during charging, and an anode configured to provide electrons and lithium ions during discharging, an electrolyte disposed between the cathode and the anode to provide an environment in which the lithium ions can move, and a separator configured to electrically insulate the anode and the cathode.

[Advantageous Effects]

According to the present disclosure, it is possible to manufacture a high-strength copper foil in which the occurrence of wrinkles or tears during a manufacturing process can be prevented, and intermediate parts and final products, such as flexible printed circuit boards (FPCBs) and secondary batteries, can be manufactured using the high-strength copper foil, so that productivity of the intermediate parts as well as the final products can be improved.

**[Description of Drawings]**

FIG. 1 is a cross-sectional view of a copper foil according to one embodiment of the present disclosure;
FIG. 2 is a cross-sectional view of a copper foil according to another embodiment of the present disclosure;
FIG. 3 is a cross-sectional view of an electrode for a secondary battery according to still another embodiment of the present disclosure;
FIG. 4 is a cross-sectional view of an electrode for a secondary battery according to yet another embodiment of the present disclosure;
FIG. 5 is a schematic cross-sectional view of a secondary battery according to yet another embodiment of the present disclosure; and
FIG. 6 is a device for manufacturing a copper foil according to yet another embodiment of the present disclosure.
FIG. 7 is a schematic diagram for explaining MD and TD.

## DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Therefore, a first component described below may be a second component within the technical spirit of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

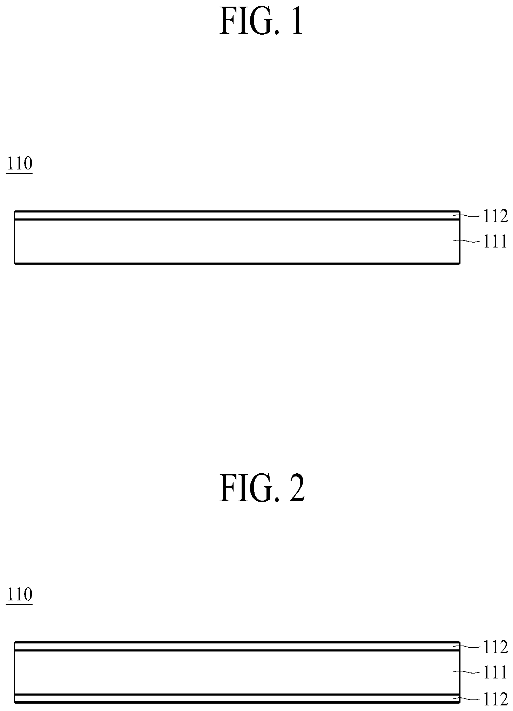

FIG. 1 is a cross-sectional view of a copper foil 110 according to one embodiment of the present disclosure.

Referring to FIG. 1, the copper foil 110 of the present disclosure includes a copper film 111 including 99.9 wt% or more of copper and a protective layer 112 formed on the copper film 111. In the copper foil 110 illustrated in FIG. 1, the protective layer 112 is formed on one surface of the copper film 111, but the embodiments of the present disclosure are not limited thereto. Referring to FIG. 2, the protective layer 112 may be formed on each of both surfaces of the copper film 111.

The copper film 111 may be formed on a rotating anode drum through electroplating, and has a shiny surface that is in direct contact with the rotating anode drum in the electroplating process and a matte surface opposite to the shiny surface.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance, thereby increasing a lifespan of a final product including the copper foil 110 as well as a lifespan of the copper foil 110 itself.

According to one embodiment of the present disclosure, the copper film 111 has an A-value in a range of 1.1 to 1.6. The A-value may be obtained by measuring and calculating each of "P" and "Q," and calculating values of measured and calculated "P" and "Q" according to Equation 1 below.

[Equation 1]

$$A=P/Q$$

"P" in Equation 1 means a peak intensity at 1650 cm$^{-1}$ of the copper film 111, and "Q" in Equation 1 means a peak intensity at 1460 cm$^{-1}$ of the copper film 111. In this case, the peak intensity is measured by Fourier-transform infrared spectroscopy (FT-IR).

The peak intensity at 1650 cm$^{-1}$ means the intensity due to C=O stretching vibration in the copper film 111, and the peak intensity at 1460 cm$^{-1}$ means the intensity due to C-H bending vibration in the copper film 111.

According to one embodiment of the present disclosure, the copper film 111 may have the A-value in the range of 1.1 to 1.6.

When the A-value of the copper film 111 is less than 1.1, a P-value (peak intensity at 1650 cm$^{-1}$) of the copper film 111 is small relative to a Q-value (peak intensity at 1460 cm$^{-1}$) of the copper film 111, and when the P-value (peak intensity at 1650 cm$^{-1}$) is small, the proportion of C=O bonds in the copper film 111 may be small. The C=O bonds in the copper film 111 are functional groups that enable hydrogen bonding. Thus, when the proportion of C=O bonds enabling hydrogen bonding is small, it may be difficult to obtain a copper foil with high-strength properties due to the small proportion of hydrogen bonds in the copper film 111. In addition, folding of the copper foil 110 may be caused, or wrinkles may form at lateral end portions of the copper foil 110 during a roll-to-roll manufacturing process.

On the other hand, when the A-value of the copper film 111 exceeds 1.6, the P-value (peak intensity at 1650 cm$^{-1}$) of the copper film 111 is very large relative to the Q-value (peak intensity at 1460 cm$^{-1}$) of the copper film 111, and when the P-value (peak intensity at 1650 cm$^{-1}$) is very large, the proportion of C=O bonds in the copper film 111 may be very large. When the proportion of C=O bonds enabling hydrogen bonding in the copper film 111 is very large, there is a risk that the copper foil 110 has a low elongation, which may cause the copper foil 110 to break during a manufacturing process of final products such as an anode current collector of a secondary battery, a flexible printed circuit board (FPCB), and the like.

Thus, in order to have high-strength properties, it is necessary for the copper film 111 to have the A-value in the range of 1.1 to 1.6.

According to one embodiment of the present disclosure, the copper foil 110 has a first stress factor value in a range of 2.8 to 3.2. The first stress factor value may be obtained by measuring each of A, A', B, B', C, and C' and substituting the measured A, A', B, B', C, and C' values into Equation 2 below.

[Equation 2]

$$\text{First stress factor}=A/A'+B/B'+C/C'$$

A in Equation 2 means a stress at 50% elongation of the copper foil 110 in a machine direction (MD direction), A' in Equation 2 means a stress at 50% elongation of the copper foil 110 in a transverse direction (TD direction), B in Equation 2 means a stress at 10% elongation of the copper foil 110 in the MD direction, B' in Equation 2 means a stress at 10% elongation of the copper foil 110 in the TD direction, C in Equation 2 means a stress at 5% elongation in the MD direction, and "C'''" in Equation 2 means a stress at 5% elongation in the TD direction. In this case, A, A', B, B', C, and C' are measured using a universal tensile testing machine (UTM).

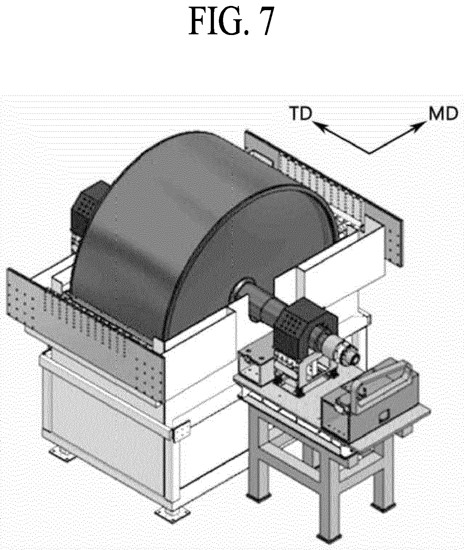

Referring to FIG. 7, there are MD (a machine direction or length direction) and TD (a transverse direction or width direction), and surface properties are different between the machine direction and the width direction. In the copper foil 110 according to one embodiment of the present disclosure, the difference in surface properties between the MD direction and the TD direction is minimized.

According to one embodiment of the present disclosure, the copper foil 110 may have a first stress factor value of 2.8 or more.

When the first stress factor value of the copper foil 110 is less than 2.8, a stress difference between the MD and TD directions may be large when the copper foil 110 is stretched. As a result, wrinkles or tears may occur during a manufacturing process of the copper foil 110, and pinholes or curls may occur on a surface of the copper foil 110. Accordingly, workability may be reduced, and a defect rate of the secondary battery may be increased.

Accordingly, in order to prevent the occurrence of wrinkles or tears during the manufacturing process of the copper foil 110, the first stress factor value of the copper foil 110 needs to be 2.8 or more.

According to one embodiment of the present disclosure, the copper foil 110 may have a second stress factor value of 2.5 or more.

The second stress factor value may be obtained by measuring each of A, A', B, and B' and substituting the measured A, A', B, and B' values into Equation 3 below.

$$[\text{Equation 3}]$$

$$\text{Second stress factor} = A/B + A'/B'.$$

When the second stress factor value of the copper foil 110 is less than 2.5, a stress difference may occur in the MD and TD directions at 10% and 50% elongations of the copper foil 110. As a result, wrinkles or tears may occur during the manufacturing process of the copper foil 110, and pinholes or curls may occur on the surface of the copper foil 110. Accordingly, the charge and discharge efficiency of an anode material may be reduced, or workability may be reduced, and thus the defect rate of the secondary battery may be increased.

Accordingly, in order to prevent the occurrence of wrinkles or tears during the manufacturing process of the copper foil 110, the second stress factor value of the copper foil 110 needs to be 2.5 or more.

According to one embodiment of the present disclosure, the copper foil 110 may have a third stress factor value of 3.5 or more.

The third stress factor value may be obtained by measuring each of A, A', C, and C' and substituting the measured A, A', C, and C' values into Equation 4 below.

$$[\text{Equation 4}]$$

$$\text{Third stress factor} = A/C + A'/C'.$$

When the third stress factor value of the copper foil 110 is less than 3.5, a stress difference may occur in the MD and TD directions at 5% and 10% elongations of the copper foil 110. As a result, wrinkles or tears may occur during the manufacturing process of the copper foil 110, and pinholes or curls may occur on the surface of the copper foil 110. Accordingly, the charge and discharge efficiency of the anode material may be reduced, or workability may be reduced, and thus a defect rate of the secondary battery may be increased.

Accordingly, in order to prevent the occurrence of wrinkles or tears during the manufacturing process of the copper foil 110, the third stress factor value of the copper foil 110 needs to be 3.5 or more.

According to one embodiment of the present disclosure, the copper foil 110 may have a Vickers hardness in a range of 1.3 Hv to 1.9 Hv.

When the Vickers hardness of the copper foil is less than 1.3 Hv, during a roll-to-roll manufacturing process, folding of the copper foil 110 may be caused between two adjacent rolls, or wrinkles may occur at lateral end portions of the copper foil 110.

On the other hand, when the Vickers hardness of the copper foil 110 exceeds 1.9 Hv, there is a risk that the copper foil 110 has a low elongation, which may cause the copper foil 110 to break during a manufacturing process of final products such as an anode current collector of a secondary battery, an FPCB, and the like. Thus, the copper foil 110 preferably has the Vickers Hardness in the range of 1.5 Hv to 1.7 Hv.

The copper foil 110 according to one embodiment of the present disclosure has a thickness of 4 $\mu$m to 35 $\mu$m. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 $\mu$m causes a decrease in workability.

On the other hand, when the secondary battery is manufactured with the copper foil 110 having a thickness exceeding 35 $\mu$m, it becomes difficult to realize high capacity due to the thick copper foil 110.

The copper foil 110 according to one embodiment of the present disclosure may have a tensile strength of 45 kg/mm$^2$ or more. In order to suppress wrinkling and tearing of the copper foil 110, the copper foil 110 of the present disclosure has a high tensile strength of 45 kg/mm$^2$ or more. When the tensile strength of the copper foil 110 is less than 45 kg/mm$^2$, during a roll-to-roll manufacturing process, folding of the copper foil 110 is caused between two adjacent rolls, or wrinkling is caused at lateral end portions of the copper foil 110.

The copper foil 110 according to one embodiment of the present disclosure may have an elongation of 3% to 13%.

In a case in which the elongation of the copper foil 110 is less than 3%, when the copper foil 110 is used as a current collector of a secondary battery, there is a high risk that the copper foil 110 will be torn because it cannot be stretched sufficiently in response to a large expansion in volume of a high-capacity active material.

On the other hand, when the elongation of the copper foil 110 exceeds 13%, the copper foil 110 is easily stretched in a process of manufacturing an electrode for a secondary battery, thereby causing deformation in the electrode.

According to one embodiment of the present disclosure, the copper foil 110 may have a ten-point average roughness (Rz) of 0.7 $\mu$m to 0.9 $\mu$m.

As the secondary battery is repeatedly charged and discharged, an active material layer may alternately contract and expand, which leads to the separation of the active material layer from the copper foil 110, thus reducing charge and discharge efficiency of the secondary battery. Accordingly, in order to secure a certain level or higher of capacity retention rate and lifespan of the secondary battery (that is, in order to suppress the deterioration of charge and discharge efficiency of the secondary battery), the bonding strength of the copper foil 110 and the active material layer should be high by allowing the copper foil 110 to have an excellent coatability on the active material.

Specifically, as the ten-point average roughness (Rz) of the copper foil 110 is smaller, the charge and discharge efficiency of the secondary battery including the copper foil 110 tends to be less deteriorated. Thus, according to one embodiment of the present disclosure, the copper foil 110 has the ten-point average roughness (Rz) of 0.7 to $\mu$m 0.9 $\mu$m.

When the ten-point average roughness (Rz) of the copper foil 110 is less than 0.7 $\mu$m, the surface area of the copper foil 110 is relatively small so that the active material is easily delaminated from the copper foil 110, and as a result, rapid lifespan deterioration of the secondary battery due to a repetition of charging and discharging is caused.

On the other hand, when the ten-point average roughness (Rz) of the copper foil 110 exceeds 0.9 $\mu$m, a plurality of spaces exist between the copper foil 110 and the active material layer since contact uniformity between the copper foil 110 and the active material layer does not reach a predetermined level (i.e., the coating itself is partially performed), and as a result, rapid lifespan deterioration of the secondary battery due to a repetition of charging and discharging is caused.

Hereinafter, an electrode 100 including the copper foil 110 of the present disclosure and a secondary battery including the electrode 100 will be described in detail.

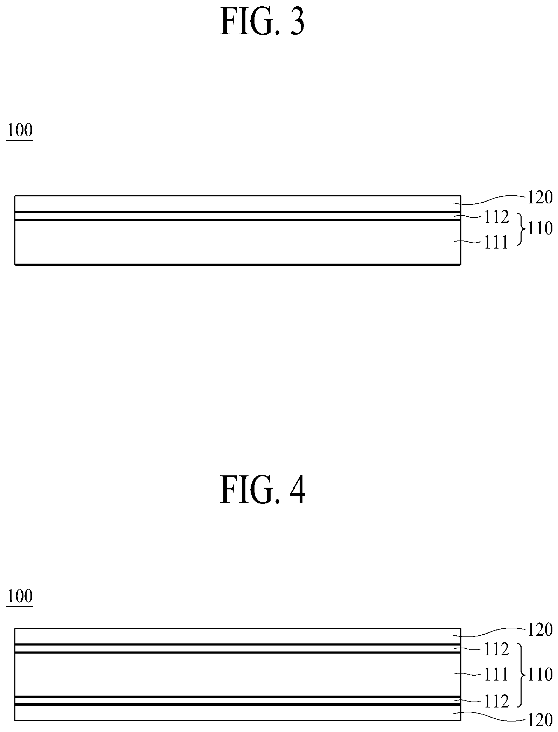

FIG. 3 is a cross-sectional view of an electrode for a secondary battery according to one embodiment of the present disclosure.

As illustrated in FIG. 3, the electrode 100 for a secondary battery according to one embodiment of the present disclosure includes the copper foil 110 of one of the above-described embodiments of the present disclosure and an active material layer 120.

FIG. 3 illustrates a configuration in which the active material layer 120 is formed on one surface of the copper foil 110. However, one embodiment of the present disclosure is not limited thereto, and referring to FIG. 4, the active material layer 120 may be formed on each of both surfaces of the copper foil 110.

Generally, in a lithium secondary battery, an aluminum foil is used as a cathode current collector combined with a cathode active material, and the copper foil 110 is used as an anode current collector combined with an anode active material.

According to one embodiment of the present disclosure, the electrode 100 for a secondary battery is an anode, the copper foil 110 is used as an anode current collector, and the active material layer 120 includes an anode active material.

In order to secure a high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

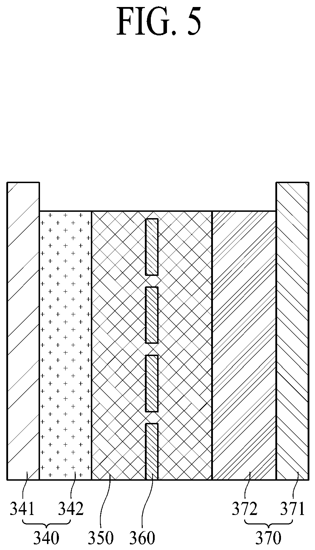

FIG. 5 is a schematic cross-sectional view of a secondary battery according to one embodiment of the present disclosure.

Referring to FIG. 5, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated at one electrode from being needlessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 or 2 may be used as the anode current collector 341. In addition, the electrode 100 for a secondary battery illustrated in FIG. 3 or 4 may be used as the anode 340 of the secondary battery illustrated in FIG. 5.

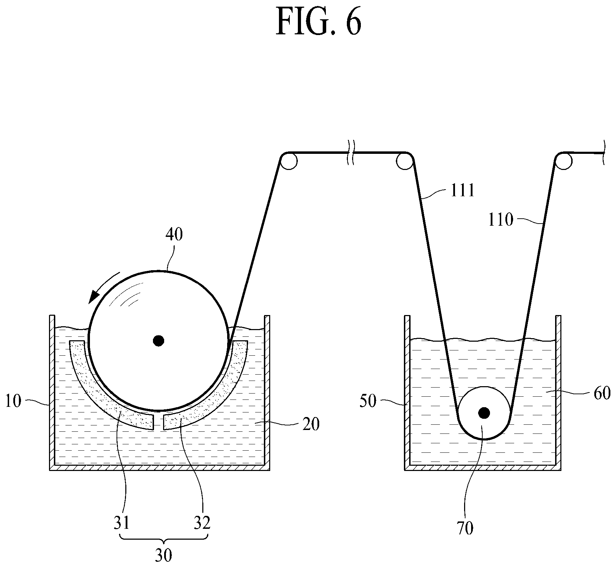

Hereinafter, a method for manufacturing the copper foil 110 of the present disclosure will be described in detail with reference to FIG. 6.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically connecting a cathode plate 30 and the rotating anode drum 40, which are disposed to be spaced apart from each other in an electrolyte 20 in an electrolytic bath 10.

As illustrated in FIG. 6, the cathode plate 30 may include first and second cathode plates 31 and 32 electrically insulated from each other.

The forming of the copper film 111 may be performed by forming a seed layer through electrical connection between the first cathode plate 31 and the rotating anode drum 40, and then growing a seed layer through electrical connection between the second cathode plate 32 and the rotating anode drum 40.

A current density provided by each of the first and second cathode plates 31 and 32 may be 30 to 130 ASD $(A/dm^2)$.

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 exceeds 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 48 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, the electrolyte 20 includes copper ions at a concentration of 70 g/L to 100 g/L, sulfuric acid at a concentration of 70 g/L to 150 g/L, chlorine (Cl) at a concentration of 15 ppm to 25 ppm, nickel (Ni) at a concentration of 15 ppm to 150 ppm, lead ions ($Pb^{2+}$) at a concentration of 1 ppm to 20 ppm, hydrogen peroxide ($H_2O_2$) at a concentration of 1 ml/L to 10 ml/L, tungsten (W) at a concentration of 0.3 ppm to 5 ppm, and an organic additive.

In order to facilitate the formation of the copper film 111 through copper electrodeposition, the concentration of copper ions and the concentration of sulfuric acid in the electrolyte 20 are adjusted in a range of 70 g/L to 100 g/L and a range of 70 g/L to 150 g/L, respectively.

In one embodiment of the present disclosure, the chlorine (Cl) includes all of chlorine ions (Cl-) and chlorine atoms present in a molecule. The chlorine (Cl) may, for example, be used to remove silver (Ag) ions introduced into the electrolyte 20 in a process of forming the copper film 111. Specifically, the chlorine (Cl) may precipitate silver (Ag) ions in the form of silver chloride (AgCl). The silver chloride (AgCl) may be removed through filtration.

When the concentration of chlorine (Cl) is less than 15 ppm, the silver (Ag) ions are not removed well. On the other hand, when the concentration of chlorine (Cl) exceeds 25 ppm, unnecessary reaction may occur due to the excessive amount of chlorine (Cl). Accordingly, the concentration of chlorine (Cl) in the electrolyte 20 is controlled in a range of 15 ppm to 25 ppm.

According to one embodiment of the present disclosure, the electrolyte 20 including an organic additive may further include hydrogen peroxide ($H_2O_2$). Due to the organic additive, organic impurities may be present in the electrolyte 20 that is continuously plated, and a content of carbon (C) in the copper foil may be appropriately adjusted by decomposing the organic impurities by treating the organic impurities with the hydrogen peroxide ($H_2O_2$). As a concentration of total organic carbon (TOC) in the electrolyte 20 is increased, an amount of carbon (C) elements introduced into the copper film 111 is increased, which causes an increase in total amount of elements detached from the copper film 111 during heat treatment and thus causes a decrease in strength of the copper foil 110 after the heat treatment.

According to one embodiment of the present disclosure, the electrolyte 20 including an organic additive may further include hydrogen peroxide (H2O2). Due to the organic additive, organic impurities may be present in the electrolyte 20 that is continuously plated, and a content of carbon (C) in the copper foil may be appropriately adjusted by decomposing the organic impurities by treating the organic impurities with hydrogen peroxide (H2O2). As a concentration of total organic carbon (TOC) in the electrolyte 20 is increased, an amount of carbon (C) elements introduced into the copper film 111 is increased, which causes an increase in total amount of elements detached from the copper film 111 during heat treatment. Accordingly, the desired first to third stress factor values may not be obtained, and as a result, wrinkles or tears may occur, and pinholes or curls may occur on the surface of the copper foil 110.

The hydrogen peroxide ($H_2O_2$) is added in an amount of 1 ml to 10 ml per one L of the electrolyte. Specifically, the hydrogen peroxide ($H_2O_2$) may be added in an amount of 2 ml to 8 ml per one L of the electrolyte. When the amount of added hydrogen peroxide ($H_2O_2$) is less than 1 ml/L, it is meaningless because there is little effect on the decomposition of organic impurities. When the amount of added hydrogen peroxide ($H_2O_2$) exceeds 10 ml/L, the organic impurities are excessively decomposed, and thus, the effects of organic additives such as a polishing agent, a moderator, and a leveling agent, are also suppressed.

The hydrogen peroxide (H2O2) is added in an amount of 1 ml to 10 ml per one L of the electrolyte. Specifically, the hydrogen peroxide (H2O2) may be added in an amount of 2 ml to 8 ml per one L of the electrolyte. When the amount of added hydrogen peroxide (H2O2) is less than 1 ml/L, there is little effect on the decomposition of organic impurities, and thus an amount of carbon (C) elements introduced into the copper film 111 is increased, which causes an increase in total amount of elements detached from the copper film 111 during heat treatment. Accordingly, the desired first to third stress factor values may not be obtained, and as a result, wrinkles or tears may occur, and pinholes or curls may occur on the surface of the copper foil 110.

According to one embodiment of the present disclosure, the electrolyte 20 including an organic additive may further include tungsten (W). When the electrolyte 20 is treated with tungsten (W), the average size of the crystalline particles included in the copper film 111 may be reduced, and the strength of the copper foil 110 may be increased. The concentration of tungsten (W) in the electrolyte 20 may be in a range of 0.3 ppm to 5 ppm. Specifically, it is preferable that the tungsten (W) is added at a concentration of 1 ppm to 4 ppm.

When the amount of added tungsten (W) is less than 0.3 ppm, an average crystalline particle size of the copper film 111 may not be sufficiently small, and the A-value of the copper film 111 becomes less than 1.1. As a result, the strength of the copper foil 110 may be reduced. In addition, folding of the copper foil 110 may be caused, or wrinkles may occur at lateral end portions of the copper foil 110 during a roll-to-roll manufacturing process.

On the other hand, when the amount of added tungsten (W) exceeds 5 ppm, impurities may be increased, and the effect of the organic additive may be suppressed. As a result, the A-value of the copper film 111 may fall outside the range of 1.1 to 1.6.

When the amount of added tungsten (W) is less than 0.3 ppm, an average crystalline particle size of the copper film 111 may not be sufficiently small, and the strength of the copper foil 110 is reduced. In addition, the average crystalline particle size of the copper film 111 becomes non-uniform, and thus the desired first to third stress factor values may not be obtained. As a result, wrinkles or tears may occur, and pinholes or curls may occur on the surface of the copper foil 110.

On the other hand, when the amount of added tungsten (W) exceeds 5 ppm, impurities may be increased, and the effect of the organic additive may be suppressed. In addition, due to the excessive impurities, a sudden change in the stress value of the copper foil 110 may occur. As a result, the desired first to third stress factor values may not be obtained, consequently, wrinkles or tears may occur, and pinholes or curls may occur on the surface of the copper foil 110.

According to one embodiment of the present disclosure, the electrolyte 20 including an organic additive may further include 1 ppm to 20 ppm of lead ions ($Pb^{2+}$). The lead ions ($Pb^{2+}$) in the electrolyte 20 are controlled at a concentration of 1 ppm to 20 ppm. In order to maintain the concentration of lead ions ($Pb^{2+}$), a material that does not include lead (Pb) may be used as a raw material input to the electrolyte 20.

When the concentration of lead ions ($Pb^{2+}$) is less than 1 ppm, which may reduce effectiveness in terms of maintaining the physical properties of the present disclosure. Accordingly, the peak intensities at 1460 cm$^{-1}$ and 1650 cm$^{-1}$ of the copper film 111 may change, causing the A-value of the copper film 111 to fall outside the range of 1.1 to 1.6.

When the concentration of lead ions ($Pb^{2+}$) exceeds 20 ppm, lead ions ($Pb^{2+}$) should be removed from the electrolyte 20 by using an ion exchange filter, and copper is non-uniformly precipitated, and thus, the peak intensities at 1460 cm$^{-1}$ and 1650 cm$^{-1}$ of the copper film 111 may change, causing the A-value of the copper film 111 to fall outside the range of 1.1 to 1.6.

When the concentration of lead ions (Pb2+) is less than 1 ppm, a problem may occur where effectiveness is reduced in terms of maintaining the physical properties of the present disclosure. As a result, the desired first to third stress factor values may not be obtained, consequently, wrinkles or tears may occur, and pinholes or curls may occur on the surface of the copper foil 110.

When the concentration of lead ions (Pb2+) exceeds 20 ppm, the lead ions (Pb2+) should be removed from the electrolyte 20 using an ion exchange filter, wrinkles or tears may occur because copper is non-uniformly precipitated, and pinholes or curls may occur on the surface of the copper foil 110. In addition, as the copper is non-uniformly precipitated, a sudden change in the stress value of the copper foil 110 may occur. As a result, the desired first to third stress factor values may not be obtained, consequently, wrinkles or tears may occur, and pinholes or curls may occur on the surface of the copper foil 110.

According to one embodiment of the present disclosure, the electrolyte 20 including an organic additive may further include nickel (Ni) at a concentration of 15 ppm to 150 ppm. The concentration of nickel (Ni) in the electrolyte 20 is controlled to be in a range of 15 ppm to 150 ppm.

When the concentration of nickel (Ni) exceeds 150 ppm, the A-value of the copper film 111 becomes less than 1.1, and as a result, the strength of the copper foil 110 is reduced, causing difficulties in manufacturing the high-strength copper foil 110.

On the other hand, when the concentration of nickel (Ni) is less than 15 ppm, the A-value of the copper film 111 becomes less than 1.1, and as a result, the strength of the copper foil 110 may be reduced, and curls may occur on the surface of the copper foil 110.

When the concentration of nickel (Ni) exceeds 150 ppm, the strength of the copper foil 110 is reduced, which may cause difficulties in manufacturing the high-strength copper foil 110. In addition, a sudden change in the stress value of the copper foil 110 may occur. As a result, the desired first to third stress factor values may not be obtained, consequently, wrinkles or tears may occur, and pinholes or curls may occur on the surface of the copper foil 110.

On the other hand, when the concentration of nickel (Ni) is less than 15 ppm, the surface roughness of the copper foil 110 may increase excessively, and thus the strength of the copper foil 110 may be reduced, and curls may occur on the surface of the copper foil 110. In addition, a sudden change in the stress value of the copper foil 110 may occur. As a result, the desired first to third stress factor values may not be obtained, consequently, wrinkles or tears may occur, and pinholes or curls may occur on the surface of the copper foil 110.

The organic additive included in the electrolyte 20 includes at least one of a polishing agent (component A), a moderator (component B), a leveling agent (component C), and a mitigation agent (component D). The organic additive in the electrolyte 20 has a concentration of 1 ppm to 100 ppm.

The organic additive may include two or more of the polishing agent (component A), the moderator (component B), the leveling agent (component C), and the mitigation agent (component D) and may include all of the four components. Even in this case, the concentration of organic additive is 100 ppm or less. When the organic additive includes all of the polishing agent (component A), the moderator (component B), the leveling agent (component C), and the mitigation agent (component D), the organic additive may have a concentration of 10 ppm to 100 ppm.

The polishing agent (component A) includes sulfonic acid or a metal salt thereof. The polishing agent (component A) may have a concentration of 1 ppm to 25 ppm in the electrolyte 20.

The polishing agent (component A) may increase an amount of electric charges of the electrolyte 20 to improve an electrodeposition speed of copper, may improve the curling characteristics of the copper foil, and may increase the gloss of the copper foil 110.

When the concentration of polishing agent (component A) is less than 1 ppm, the gloss of the copper foil 110 is lowered, and when the concentration of polishing agent (component A) exceeds 25 ppm, the roughness of the copper foil 110 may be increased and the A-value of the copper film 111 becomes less than 1.1. As a result, the strength of the copper foil 110 may be reduced, and folding of the copper foil 110 may be caused, or wrinkles may occur at lateral end portions of the copper foil 110 during a roll-to-roll manufacturing process.

The polishing agent (component A) may increase an amount of electric charges in the electrolyte 20 to improve an electrodeposition rate of copper, may improve the curling characteristics of the copper foil, and may increase the gloss of the copper foil 110. When the concentration of polishing agent (component A) is less than 1 ppm, the gloss of the copper foil 110 is reduced, and when the concentration of polishing agent (component A) exceeds 25 ppm, wrinkles or tears may occur in the copper foil 110, pinholes or curls may occur on the surface of the copper foil 110, and a sudden change in the stress value of the copper foil 110 may occur. As a result, the desired first to third stress factor values may not be obtained, consequently, wrinkles or tears may occur, and pinholes or curls may occur on the surface of the copper foil 110.

More specifically, the polishing agent (component A) may have a concentration of 5 ppm to 20 ppm in the electrolyte 20.

The polishing agent may include, for example, at least one selected from among a bis-(3-sulfopropyl)-disulfide disodium salt, 3-mercapto-1-propanesulfonic acid, a 3-(N,N-dimethylthiocarbamoyl)-thiopropanesulfonate sodium salt, a 3-[(amino-iminomethyl)thio]-1-propanesulfonate sodium salt, an O-ethyldithiocarbonato-S-(3-sulfopropyl)-ester sodium salt, a 3-(benzothiazolyl-2-mercapto)-propyl-sulfonic acid sodium salt, and an ethylenedithiodipropylsulfonic acid sodium salt.

The moderator (component B) includes a non-ionic water-soluble polymer. The moderator (component B) may have a concentration of 1 ppm to 15 ppm in the electrolyte 20.

The moderator (component B) reduces the electrodeposition speed of copper to prevent an rapid increase in roughness and a decrease in strength of the copper foil 110. This moderator (component B) is referred to as an inhibitor or suppressor.

When the concentration of moderator (component B) is less than 1 ppm, the roughness of the copper foil 110 rapidly rises, and the A-value of the copper film 111 becomes less than 1.1. As a result, the strength of the copper foil 110 may be reduced, and folding of the copper foil 110 may be caused, or wrinkles may occur at lateral end portions of the copper foil 110 during a roll-to-roll manufacturing process.

When the concentration of moderator (component B) is less than 1 ppm, the roughness of the copper foil 110 rapidly rises, and the strength of the copper foil 110 may be reduced. As a result, wrinkles or tears may occur in the copper foil 110, and pinholes or curls may occur on the surface of the copper foil 110. In addition, a sudden change in the stress value of the copper foil 110 may occur. As a result, the desired first to third stress factor values may not be obtained, consequently, wrinkles or tears may occur, and pinholes or curls may occur on the surface of the copper foil 110.

On the other hand, although the concentration of moderator (component B) exceeds 15 ppm, there is almost no change in physical properties such as the appearance, gloss, roughness, strength, and elongation of the copper foil 110. Accordingly, without increasing manufacturing costs and wasting raw materials due to an unnecessary increase in concentration of moderator (component B), the concentration of moderator (component B) may be adjusted in a range of 1 ppm to 10 ppm.

The moderator (component B) may include, for example, at least one non-ionic water-soluble polymer selected from among a polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of the moderator is not limited thereto, and other non-ionic water-soluble polymers usable to manufacture the high strength copper foil 110 may be used as the moderator.

The leveling agent (component C) includes at least one of nitrogen (N) and sulfur (S). That is, the leveling agent (component C) may include one or more nitrogen atoms (N) or one or more sulfur atoms (S) in one molecule and may include one or more nitrogen atoms (N) and one or more sulfur atoms (S). For example, the leveling agent (component C) is an organic compound including at least one of nitrogen (N) and sulfur (S).

The leveling agent (component C) prevents excessively high peaks or excessively large protrusions from being generated in the copper film 111 to enable the copper film 111 to be macroscopically planarized. The leveling agent (component C) may have a concentration of 1 ppm to 15 ppm in the electrolyte 20.

When the concentration of leveling agent (component C) is less than 1 ppm, the A-value of the copper film 111 becomes less than 1.1. As a result, the strength of the copper foil 110 may be reduced, and folding of the copper foil 110 may be caused, or wrinkles may occur at lateral end portions of the copper foil 110 during a roll-to-roll manufacturing process.

On the other hand, when the concentration of leveling agent (component C) exceeds 15 ppm, the surface roughness of the copper foil 110 may be excessively increased to decrease strength, and pinholes or curling may occur on a surface of the copper foil 110, which makes it difficult to separate the copper foil 110 from a winder WR after being manufactured.

When the concentration of leveling agent (component C) is less than 1 ppm, the strength of the copper foil 110 is reduced, which may cause difficulties in manufacturing the high-strength copper foil 110. In addition, a sudden change in the stress value of the copper foil 110 may occur. As a result, the desired first to third stress factor values may not be obtained, consequently, wrinkles or tears may occur, and pinholes or curls may occur on the surface of the copper foil 110.

On the other hand, when the concentration of leveling agent (component C) exceeds 15 ppm, the surface roughness of the copper foil 110 may increase excessively, which may reduce the strength of the copper foil 110, and pinholes or curls may occur on the surface of the copper foil 110, which makes it difficult to separate the copper foil 110 from a winder WR after being manufactured. In addition, when the concentration of leveling agent (component C) exceeds 15 ppm, a sudden change in the stress value of the copper foil 110 may occur. As a result, the desired first to third stress factor values may not be obtained.

The leveling agent (component C) may include, for example, at least one selected from among diethylthiourea, ethylenethiourea, acetylenethiourea, dipropylthiourea, dibutylthiourea, N-trifluoroacetylthiourea, N-ethylthiourea, N-cyanoacetylthiourea, N-allylthiourea, o-tolylthiourea, N,N'-butylenethiourea, thiazolidinethiol, 4-thiazolinethiol, 4-methyl-2-pyrimidinethiol, 2-thiouracil, 3-(benzotriazole-2-mercapto)-pyrosulfuric acid, 2-mercaptopyridine, 3-(5-mercapto-1H-tetrazole)benzenesulfonate, 2-mercaptobenzothiazole, dimethylpyridine, 2,2'-bipyridine, 4,4'-bipyridine, pyrimidine, pyridazine, pyrinoline, oxazole, thiazole, 1-methylimidazole, 1-benzylimidazole, 1-methyl-2-methylimidazole, 1-benzyl-2-methylimidazole, 1-ethyl-4-methylimidazole, 1-ethyl-2-ethyl-4-methylol, N-methylpyrrole, N-ethylpyrrole, N-butylpyrrole, N-methylpyrroline, N-ethylpyrroline, N-butylpyrroline, purine, quinoline, isoquinoline, N-methylcarbazole, N-ethylcarbazole, and N-butylcarbazole.

The mitigation agent (component D) may include citric acid (CA). Specifically, the electrolyte 20 may include 1 ppm to 5 ppm of citric acid (CA).

When the concentration of citric acid (CA) in the electrolyte 20 exceeds 5 ppm, the surface roughness of the copper foil 110 is excessively increased, and thus, the A-value of the copper film 111 becomes less than 1.1. In addition, the Vickers hardness and tensile strength of the copper foil 110 may be reduced.

On the other hand, when the concentration of citric acid (CA) in the electrolyte 20 is less than 1 ppm, the A-value of the copper film 111 becomes less than 1.1. As a result, the strength of the copper foil 110 may be reduced, which may cause difficulties in manufacturing the high-strength copper foil 110.

When the concentration of citric acid (CA) in the electrolyte 20 exceeds 5 ppm, the surface roughness of the copper foil 110 may increase excessively, which may reduce the strength of the copper foil 110, and pinholes may occur on the surface of the copper foil 110. In addition, a sudden change in the stress value of the copper foil 110 may occur. As a result, the desired first to third stress factor values may not be obtained.

On the other hand, when the concentration of citric acid (CA) in the electrolyte 20 is less than 1 ppm, the strength of the copper foil 110 is reduced, which may cause difficulties in manufacturing the high-strength copper foil 110. In addition, a sudden change in the stress value of the copper foil 110 may occur. As a result, the desired first to third stress factor values may not be obtained, and thus, wrinkles or tears may occur, and pinholes or curls may occur on the surface of the copper foil 110.

When forming the copper film 111, a flow rate of the electrolyte 20 supplied into the electrolytic bath 10 may be 41 $m^3$/hour to 45 $m^3$/hour.

The forming of the copper film 111 may include at least one of filtering the electrolyte 20 using activated carbon, filtering the electrolyte 20 using diatomaceous earth, and treating the electrolyte 20 with ozone ($O_3$).

Specifically, in order to filter the electrolyte 20, the electrolyte 20 may be circulated at a flow rate of 35 $m^3$/hour to 45 $m^3$/hour. That is, in order to remove solid impurities present in the electrolyte 20 while electroplating to form the copper film 111, filtering may be performed at the flow rate of 35 $m^3$/hour to 45 $m^3$/hour. In this case, activated carbon or diatomaceous earth may be used.

In order to maintain the cleanliness of the electrolyte 20, the electrolyte 20 may be treated with ozone ($O_3$).

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of TOC in the electrolyte 20 is controlled to be 50 ppm or less. That is, the electrolyte 20 may have a TOC concentration of 50 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 6, the method may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in a 1g/L to 10 g/L potassium dichromate solution at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one anode active material selected from the group consisting of carbon, a metal (Me) of Si, Ge, Sn, Li, Zn, Mg, Cd, Ce, Ni or Fe, an alloy including the metal (Me), an oxide (MeOx) of the metal (Me), and a composite of the metal (Me) and carbon is coated on one surface or both surfaces the copper foil 110 of the present disclosure prepared through the method as described above to manufacture an electrode (i.e., anode) for a secondary battery of the present disclosure.

For example, 100 parts by weight of carbon for an anode active material, 1 to 3 parts by weight of styrene butadiene rubber (SBR), and 1 to 3 parts by weight of carboxymethyl cellulose (CMC) are mixed and prepared as a slurry using distilled water as a solvent. Subsequently, the slurry is applied on the copper foil 110 to a thickness of 20 $\mu$m to 60 $\mu$m using a doctor blade and pressed at a pressure of 0.5 to 1.5 ton/cm$^2$ at 110 °C to 130 °C.

A secondary battery may be manufactured using the electrode (anode) for a secondary battery of the present disclosure manufactured through the method as described above, together with a conventional cathode, electrolyte and separator.

Hereinafter, the present disclosure will be described in detail with reference to examples and comparative examples. However, the examples described below are only intended to the understanding of the present disclosure, and the scope of the present disclosure is not limited to these examples.

Examples 1 to 5 and Comparative Examples 1 to 5

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD.

In addition, concentrations of chlorine (Cl), nickel (Ni), lead (Pb), hydrogen peroxide, and tungsten, which are contained in the electrolyte 20, and a concentration of an organic additive were as shown in Table 1 below.

In the organic additive, a bis-(3-sulfopropyl)-disulfide disodium salt (SPS) was used as a polishing agent (component A), PEG was used as a moderator (component B), and ethylene thiourea (ETU) was used as a leveling agent (component C).

A current at a current density of 60 ASD was applied between the rotating anode drum 40 and the cathode plate 30 to prepare a copper film 111. Thereafter, the copper film 111 was immersed in an anticorrosion solution for about two seconds to perform chromate treatment on the surface of the copper film 111 to form a protective layer 112, thereby preparing a copper foil 110. An anticorrosion solution containing chromic acid as a main component was used as the anticorrosion solution, and a concentration of chromic acid was 5 g/L.

As a result, copper foils of Examples 1 to 5 and Comparative Examples 1 to 5 were prepared.

[Table 1]

| | SPS (Component A) (ppm) | PEG (Component B) (ppm) | ETU (Component C) (ppm) | CA (component D) (ppm) | Chlorine (ppm) | Nickel (ppm) | Lead (ppm) | Hydrogen peroxide (ml/L) | Tungsten (ppm) |
|---|---|---|---|---|---|---|---|---|---|
| Example 1 | 5 | 2 | 3 | 1 | 20 | 50 | 10 | 2 | 1 |
| Example 2 | 10 | 4 | 5 | 3 | 20 | 60 | 15 | 5 | 3 |
| Example 3 | 15 | 6 | 7 | 5 | 20 | 80 | 18 | 7 | 5 |
| Example 4 | 20 | 8 | 9 | 2 | 20 | 100 | 8 | 7 | 1 |
| Example 5 | 15 | 10 | 10 | 4 | 20 | 120 | 5 | 5 | 3 |
| Comparative Example 1 | 55 | 5 | 5 | 5 | 20 | 5 | 0.1 | 9 | 3 |
| Comparative Example 2 | 10 | 50 | 7 | 5 | 20 | 50 | 50 | 7 | 0.1 |
| Comparative Example 3 | 15 | 7 | 10 | 3 | 20 | 30 | 10 | 5 | 10 |
| Comparative Example 4 | 10 | 5 | 7 | 55 | 20 | 200 | 10 | 5 | 0.1 |
| Comparative Example 5 | 10 | 5 | 20 | 5 | 20 | 30 | 10 | 5 | 3 |

[Table 2]

| | Peak intensity (P) | Peak intensity (Q) | A(P/Q) | Vickers hardness (Hv) | Occurrence of wrinkle/tear | Occurrence of breakage |
|---|---|---|---|---|---|---|
| Example 1 | 0.00094 | 0.00064 | 1.47 | 1.52 | no | no |
| Example 2 | 0.00100 | 0.00084 | 1.19 | 1.85 | no | no |
| Example 3 | 0.00097 | 0.00074 | 1.31 | 1.54 | no | no |
| Example 4 | 0.00102 | 0.00070 | 1.46 | 1.60 | no | no |
| Example 5 | 0.00089 | 0.00057 | 1.56 | 1.41 | no | no |

(continued)

|  | Peak intensity (P) | Peak intensity (Q) | A(P/Q) | Vickers hardness (Hv) | Occurrence of wrinkle/tear | Occurrence of breakage |
|---|---|---|---|---|---|---|
| Comparative Example 1 | 0.00086 | 0.00088 | 0.98 | 1.21 | Occurance | no |
| Comparative Example 2 | 0.00099 | 0.00061 | 0.98 | 1.21 | Occurance | no |
| Comparative Example 3 | 0.00127 | 0.00079 | 1.61 | 1.55 | no | Occurance |
| Comparative Example 4 | 0.00088 | 0.00092 | 0.96 | 1.23 | Occurance | no |
| Comparative Example 5 | 0.00092 | 0.00100 | 0.92 | 1.18 | Occurance | no |

For the copper foils of Examples 1 to 5 and Comparative Examples 1 to 5 manufactured as described above, i) peak intensity (P), ii) peak intensity (Q), iii) A(P/Q), iv) Vickers hardness, V) occurrence of wrinkle/tear, and vi) occurrence of breakage were checked.

Measurement of i) peak intensity (P) and ii) peak intensity (Q)

The peak intensity (P) is a peak intensity at 1650 cm$^{-1}$ of the copper film 111, and the peak intensity (Q) is a peak intensity at 1460 cm$^{-1}$ of the copper film 111.
At this time, the peak intensities (P and Q) are measured by FT-IR.

iii) Measurement of A(P/Q)

An A-value can may be obtained by calculating values of the measured i) peak intensity (P) and ii) peak intensity (Q) according to Equation 1 below.

[Equation 1]

$$A=P/Q$$

Iv) Vickers hardness (Hv)

The Vickers hardness (Hv) was measured using a nanoindenter (HM 2000, Helmut Fischer).

Environmental: temperature of $(23\pm2)$ °C and humidity (R.H.) of $45\pm5\%$.
Indenter Type: Vickers Indenter (Correction Factor: 0.75)
Load Increase Time: 10 s
Unload Increase Time: 10 s
Creep Time: 3 s
Load: 0.5 mN

The Vickers hardness in Table 2 above means an average of values obtained by measuring Vickers hardness three times by the above method.

v) Occurrence of wrinkle/tear

After 100 charges and discharges, the secondary battery was disassembled to observe whether a wrinkle or a tear occurred on the copper foil. When the copper foil was wrinkled or torn, the copper foil was marked as "occurrence," and when the copper foil was not wrinkled or torn, the copper foil was marked as "no."

vi) Occurrence of breakage

After 100 charges and discharges, the secondary battery was disassembled to observe whether a breakage occurred in the copper foil. The copper foil was marked as "occurrence" when a breakage occurred in the copper foil, and "no" when no breakage was observed.

Referring to Tables 1 and 2, the following results may be confirmed.

A tear/wrinkle occurred in the copper foil of Comparative Example 1 prepared using an electrolyte including a polishing agent (component A) in an excessive amount, and nickel and lead in small amounts.

A tear/wrinkle occurred in the copper foil of Comparative Example 2 prepared using an electrolyte including a moderator (component B) and lead in excessive amounts, and tungsten in a small amount.

A breakage occurred in the copper foil of Comparative Example 3 prepared by an electrolyte including tungsten in an excessive amount.

A tear/wrinkle occurred in the copper foil of Comparative Example 4 prepared using an electrolyte including a mitigation agent (component D) and nickel in excessive amounts, and the tungsten in a small amount.

A tear/wrinkle occurred in the copper foil of Comparative Example 5 prepared using an electrolyte including a leveling agent (component C) in an excessive amount.

On the other hand, all the copper foils of Examples 1 to 5 according to the present disclosure satisfied values within the above standard ranges, and no wrinkle/tear occurred and no breakage occurred.

Examples 6 to 10 and Comparative Examples 6 to 9

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD

In addition, concentrations of chlorine (Cl), nickel (Ni), lead (Pb), hydrogen peroxide, and tungsten (W), which are contained in the electrolyte 20, and a concentration of an organic additive were as shown in Table 3 below.

In the organic additive, a bis-(3-sulfopropyl)-disulfide disodium salt (SPS) was used as a polishing agent (component A), PEG was used as a moderator (component B), and ethylene thiourea (ETU) was used as a leveling agent (component C).

A current at a current density of 60 ASD was applied between the rotating anode drum 40 and the cathode plate 30 to manufacture a copper film 111. Thereafter, the copper film 111 was immersed in an anticorrosion solution for about two seconds to perform chromate treatment on the surface of the copper film 111 to form a protective layer 112, thereby manufacturing a copper foil 110. An anticorrosion solution containing chromic acid as a main component was used as the anticorrosion solution, and a concentration of chromic acid was 5 g/L.

As a result, copper foils of Examples 6 to 10 and Comparative Examples 6 to 9 were manufactured.

[Table 3]

| | SPS (Component A) (ppm) | PEG (Component B) (ppm) | ETU (Component C) (ppm) | CA (component D) (ppm) | Chlorine (ppm) | Nickel (ppm) | Lead (ppm) | Hydrogen peroxide (ml/L) | Tungsten (ppm) |
|---|---|---|---|---|---|---|---|---|---|
| Example 6 | 5 | 2 | 3 | 1 | 20 | 50 | 10 | 2 | 1 |
| Example 7 | 10 | 4 | 5 | 3 | 20 | 60 | 15 | 5 | 3 |
| Example 8 | 15 | 6 | 7 | 5 | 20 | 80 | 15 | 7 | 5 |
| Example 9 | 20 | 8 | 9 | 2 | 20 | 100 | 18 | 7 | 1 |
| Example 10 | 15 | 10 | 10 | 4 | 20 | 120 | 8 | 5 | 3 |
| Comparative Example 6 | 55 | 5 | 5 | 5 | 20 | 5 | 0.1 | 5 | 0.1 |
| Comparative Example 7 | 10 | 50 | 7 | 5 | 20 | 50 | 0.1 | 0.1 | 1 |
| Comparative Example 8 | 15 | 7 | 55 | 3 | 20 | 30 | 15 | 15 | 10 |
| Comparative Example 9 | 10 | 5 | 7 | 55 | 20 | 200 | 50 | 5 | 3 |

[Table 2]

| Classification | MD direction | | | TD direction | | | First stress factor (A/A'+B/ B'+C/C') | Second stress factor (A/B+A'/ B') | Third stress factor (A/C+A' / C') | Occurrence of wrinkles/tears |
|---|---|---|---|---|---|---|---|---|---|---|
| | A (Pa) | B (Pa) | C (Pa) | A' (Pa) | B' (Pa) | C' (Pa) | | | | |
| Example 6 | 48.7 | 37.2 | 23.2 | 48.3 | 37.9 | 24.1 | 2.95 | 2.58 | 4.10 | no |
| Example 7 | 55.3 | 42.1 | 26.2 | 55.2 | 44.2 | 24.1 | 3.04 | 2.56 | 4.40 | no |
| Example 8 | 45.3 | 32.1 | 23.9 | 46.9 | 36.8 | 23.4 | 2.86 | 2.69 | 3.90 | no |
| Example 9 | 52.2 | 39.2 | 24.8 | 50.4 | 41.2 | 25.4 | 2.96 | 2.55 | 4.09 | no |
| Example 10 | 49.3 | 37.4 | 24.1 | 48.8 | 38.2 | 23.4 | 3.02 | 2.60 | 4.13 | no |
| Comparative Example 6 | 53.2 | 44.8 | 32.1 | 57.2 | 46.8 | 33.6 | 2.84 | 2.41 | 3.36 | Occurance |
| Comparative Example 7 | 36.2 | 29.9 | 21.1 | 38.3 | 31.9 | 25.7 | 2.83 | 2.41 | 3.44 | Occurance |
| Comparative Example 8 | 41.8 | 33.2 | 21.1 | 46.9 | 36.8 | 25.7 | 2.61 | 2.53 | 3.81 | Occurance |
| Comparative Example 9 | 50.2 | 43.2 | 30.8 | 50.1 | 46.8 | 34.2 | 2.83 | 2.23 | 3.09 | Occurance |

For the copper foils of Examples 6 to 10 and Comparative Examples 6 to 9 manufactured as described above, i) A, A', B, B', C, and C' ii) first stress factor, iii) second stress factor, iv) third stress factor, and v) occurrence of wrinkles/tears were checked.

Measurement of A, A', B, B', C, and C'

A represents a stress at 50% elongation of the copper foil in an MD direction, A' represents a stress at 50% elongation of the copper foil in a TD direction, B represents a stress at 10% elongation of the copper foil 110 in the MD direction, B' represents a stress at 10% elongation of the copper foil 110 in the TD direction, C represents a stress at 5% elongation of the copper foil in the MD direction, and "C‴" represents a stress at 5% elongation of the copper foil in the TD direction.

A, A', B, B', C, and C' were measured using a universal testing machine (UTM, INSTRON) according to the method specified in the IPC-TM-650 test method manual. A width of a sample was 12.7 mm, a distance between grips was 50 mm, and a measurement speed was 50 mm/min.

A was obtained by measuring a stress after 50% elongation of the copper foil in the MD direction under the same conditions as above, A' was obtained by measuring a stress after 50% elongation of the copper foil in the TD direction under the same conditions as above, B was obtained by measuring a stress after 10% elongation of the copper foil in the MD direction under the same conditions as above, B' was obtained by measuring a stress after 10% elongation of the copper foil in the TD direction under the same conditions as above, C was obtained by measuring a stress after 5% elongation of the copper foil in the MD direction under the same conditions as above, and C' was obtained by measuring a stress after 5% elongation of the copper foil in the TD direction under the same conditions as above. The elongation length of the copper foil when measuring the breaking stress of the copper foil sample in the universal testing machine was defined as maximum elongation, and the stress at 50% elongation compared to the maximum elongation of the copper foil was defined as stress at 50% elongation. Likewise, the stress at 10% elongation compared to the maximum elongation of the copper foil was defined as stress at 10% elongation, and the stress at 5% elongation compared to the maximum elongation of the copper foil was defined as stress at 5% elongation.

ii) Calculation of first stress factor

The first stress factor value may be obtained by substituting the measured A, A', B, B', C, and C' values into Equation 2 below.

[Equation 2]

First stress factor=A/A'+B/B'+C/C'.

iii) Calculation of second stress factor

The second stress factor value may be obtained by substituting the measured A, A', B, and B' values into Equation 3 below.

[Equation 3]

Second stress factor=A/B+A'/B'.

iv) Calculation of third stress factor

The third stress factor value may be obtained by substituting the measured A, A', C, and C' values into Equation 4 below.

[Equation 4]

Third stress factor=A/C+A'/C'.

v) Occurrence of wrinkles/tears

After charging and discharging 100 times, the secondary battery was disassembled to observe whether wrinkles or tears occurred in the copper foil. When the copper foil was wrinkled or torn, the copper foil was marked as "occurred," and when the copper foil was not wrinkled or torn, the copper foil was marked as "none."

Referring to Tables 3 and 4, the following results can be confirmed.

Tears/wrinkles occurred in the copper foil of Comparative Example 6 prepared using an electrolyte including a polishing agent (component A) in an excessive amount, and nickel, lead, and tungsten in small amounts.

Tears/wrinkles occurred in the copper foil of Comparative Example 7 prepared using an electrolyte including a moderator (component B) in an excessive amount, and lead and hydrogen peroxide in small amounts.

Tears/wrinkles occurred in the copper foil of Comparative Example 8 prepared using an electrolyte including a leveling agent (component C), hydrogen peroxide and tungsten in excessive amounts.

Tears/wrinkles occurred in the copper foil of Comparative Example 9 prepared using an electrolyte including a mitigation agent (component D), nickel and lead in excessive amounts.

On the other hand, all the copper foils of Examples 6 to 10 according to the present disclosure satisfied values within the above standard ranges, resulting in no occurrence of tears/wrinkles.

It will be apparent to those skilled in the art that the present disclosure described above is not limited by the above-described embodiments and the accompanying drawings and that various substitutions, modifications, and variations can be made in the present disclosure without departing from the spirit and scope of the present disclosure. Accordingly, the scope of the present disclosure is defined by the accompanying claims, and it is intended that all variations and modifications derived from the meaning, scope, and equivalent concept of the claims fall within the scope of the present disclosure.

**Claims**

1. A copper foil comprising a copper film including 99.9 wt% or more of copper,

   wherein the copper film has an A-value in a range of 1.1 to 1.6,
   wherein "A" is calculated by Equation 1 below, [Equation 1]

$$A=P/Q$$

wherein "P" in Equation 1 is a peak intensity at 1650 cm$^{-1}$ of the copper film, and
"Q" in Equation 1 is a peak intensity at 1460 cm$^{-1}$ of the copper film,
wherein the peak intensity is measured by Fourier-transform infrared spectroscopy (FT-IR).

2. The copper foil of claim 1, wherein the copper foil has a Vickers hardness in a range of 1.3 Hv to 1.9 Hv.

3. The copper foil of claim 1, wherein the copper foil has a tensile strength of 45 kgf/mm$^2$ or more.

4. The copper foil of claim 1, wherein the copper foil has an elongation of 3% to 13%.

5. The copper foil of claim 1, further comprising a protective layer formed on the copper film.

6. The copper foil of claim 5, wherein the protective layer includes at least one of a chromium compound, a silane compound, and a nitrogen compound.

7. A method for manufacturing a copper foil, the method comprising:

preparing an electrolyte containing copper ions;
forming a copper film; and
forming a protective layer on the copper film,
wherein the forming of the copper film includes forming the copper film on a rotating anode drum by electrically connecting a cathode plate and the rotating anode drum, which are disposed to be spaced apart from each other in the electrolyte in an electrolytic bath, and
the electrolyte includes:

copper ions at a concentration of 70 g/L to 100 g/L;
sulfuric acid at a concentration of 70 g/L to 150 g/L;
chlorine (Cl) at a concentration of 15 ppm to 25 ppm;
nickel (Ni) at a concentration of 15 ppm to 150 ppm;
lead ions (Pb$^{2+}$) at a concentration of 1 ppm to 20 ppm;
hydrogen peroxide at a concentration of 1 ml/L to 10 ml/L;
tungsten (W) at a concentration of 0.3 ppm to 5 ppm; and
an organic additive,
wherein the organic additive includes at least one of a polishing agent (component A), a moderator (component B), a leveling agent (component C), and a mitigation agent (component D),
wherein the polishing agent (component A) includes sulfonic acid or a metal salt thereof,
the moderator (component B) includes a non-ionic water-soluble polymer,
the leveling agent (component C) includes at least one of nitrogen (N) and sulfur (S), and
the mitigation agent (component D) includes citric acid.

8. The method of claim 7, wherein the polishing agent (component A) has a content of 1 ppm to 25 ppm.

9. The method of claim 7, wherein the moderator (component B) has a content of 1 ppm to 15 ppm.

10. The method of claim 7, wherein the leveling agent (component C) has a content of 1 ppm to 15 ppm.

11. The method of claim 7, wherein the mitigation agent (component D) has a content of 1 ppm to 5 ppm.

12. A copper foil comprising a copper film including 99.9 wt% or more of copper,

wherein the copper foil has a first stress factor of 2.8 or more, a second stress factor of 2.5 or more, and a third stress factor of 3.5 or more,
wherein the first stress factor is calculated by Equation 2,

[Equation 2]

$$\text{first stress factor} = A/A' + B/B' + C/C',$$

the second stress factor is calculated by Equation 3,

[Equation 3]

$$\text{second stress factor} = A/B + A'/B',$$

and
the third stress factor is calculated by Equation 4 below,

[Equation 4]

$$\text{third stress factor} = A/C + A'/C',$$

wherein A in Equation 2 is a stress at 50% elongation in a machine direction (MD direction),
A' in Equation 2 is a stress at 50% elongation in a transverse direction (TD direction),
B in Equation 2 is a stress at 10% elongation in the MD direction,
B' in Equation 2 is a stress at 10% elongation in the TD direction,
C in Equation 2 is a stress at 5% elongation in the MD direction, and
C' in Equation 2 is a stress at 5% elongation in the TD direction.

13. The copper foil of claim 12, further comprising a protective layer formed on the copper film.

14. The copper foil of claim 13, wherein the protective layer includes at least one of a chromium compound, a silane compound, and a nitrogen compound.

# FIG. 1

110

112
111

# FIG. 2

110

112
111
112

# FIG. 3

100

120
112 } 110
111

# FIG. 4

100

120
112 }
111 } 110
112 }
120

# FIG. 5

341    342              372    371
    340        350  360        370

# FIG. 6

# FIG. 7

## INTERNATIONAL SEARCH REPORT

| International application No. |
|---|
| **PCT/KR2023/018615** |

**A. CLASSIFICATION OF SUBJECT MATTER**

**C25D 1/04**(2006.01)i; **C25D 3/38**(2006.01)i; **C23C 28/00**(2006.01)i; **H01M 4/66**(2006.01)i; **H01M 10/052**(2010.01)i; **C25D 17/12**(2006.01)i; **C23F 11/18**(2006.01)i

According to International Patent Classification (IPC) or to both national classification and IPC

**B. FIELDS SEARCHED**

Minimum documentation searched (classification system followed by classification symbols)

C25D 1/04(2006.01); B32B 7/12(2006.01); C22C 9/00(2006.01); C25D 1/00(2006.01); C25D 3/38(2006.01); H01L 23/48(2006.01); H01M 10/052(2010.01); H01M 2/02(2006.01); H01M 4/13(2010.01); H01M 4/66(2006.01); H01M 50/10(2021.01); H01M 50/183(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동박(copper foil), 피크 강도(peak intensity), 푸리에 변환 적외선분광법(FT-IR), 전해액(electrolyte), 니켈(Ni), 납(Pb), 텅스텐(W), 유기 첨가제(organic additive), 응력 계수(stress coefficient), 폭 방향(TD), 길이 방향(MD), 신장(elongation)

**C. DOCUMENTS CONSIDERED TO BE RELEVANT**

| Category* | Citation of document, with indication, where appropriate, of the relevant passages | Relevant to claim No. |
|---|---|---|
| A | KR 10-2014-0003511 A (FURUKAWA ELECTRIC CO., LTD.) 09 January 2014 (2014-01-09)<br>See paragraphs [0248]-[0251] and claim 16. | 1-14 |
| A | KR 10-2016-0134636 A (DAI NIPPON PRINTING CO., LTD.) 23 November 2016 (2016-11-23)<br>See claim 1. | 1-14 |
| A | KR 10-2021-0056073 A (SK NEXILIS CO., LTD.) 18 May 2021 (2021-05-18)<br>See paragraph [0061]; and claims 10, 13 and 19. | 1-14 |
| A | KR 10-1669087 B1 (FURUKAWA ELECTRIC CO., LTD.) 25 October 2016 (2016-10-25)<br>See paragraphs [0092]-[0110] and [0147]-[0152] and claim 15. | 1-14 |
| A | US 2016-0365545 A1 (DAI NIPPON PRINTING CO., LTD.) 15 December 2016 (2016-12-15)<br>See claims 1 and 4. | 1-14 |

[✓] Further documents are listed in the continuation of Box C.  [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2024** | **13 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/018615**

| C. | DOCUMENTS CONSIDERED TO BE RELEVANT | |
|---|---|---|
| Category* | Citation of document, with indication, where appropriate, of the relevant passages | Relevant to claim No. |
| A | JP 2012-212529 A (JX NIPPON MINING & METALS CORP.) 01 November 2012 (2012-11-01)<br>See paragraph [0038]. | 1-14 |
| A | KR 10-1999-0076497 A (HITACHI CABLE, LTD.) 15 October 1999 (1999-10-15)<br>See claim 14. | 1-14 |

Form PCT/ISA/210 (second sheet) (July 2022)

## INTERNATIONAL SEARCH REPORT

International application No.

**PCT/KR2023/018615**

| Box No. III | Observations where unity of invention is lacking (Continuation of item 3 of first sheet) |
|---|---|

This International Searching Authority found multiple inventions in this international application, as follows:

The invention of group 1: claims 1-6 pertain to a copper foil having a copper film that comprises 99.9 wt% or more of copper, and having an A value in a specific range,

The invention of group 2: claims 7-11 pertain to a copper foil manufacturing method,

The invention of group 3: claims 12-14 pertain to a copper foil having a copper film that comprises 99.9 wt% or more of copper, and having first to third coefficients in a specific range.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**
[ ] The additional search fees were accompanied by the applicant's protest and, where applicable, the payment of a protest fee.
[ ] The additional search fees were accompanied by the applicant's protest but the applicable protest fee was not paid within the time limit specified in the invitation.
[✓] No protest accompanied the payment of additional search fees.

Form PCT/ISA/210 (continuation of first sheet) (July 2022)

## INTERNATIONAL SEARCH REPORT
### Information on patent family members

International application No.

**PCT/KR2023/018615**

| Patent document cited in search report | | | Publication date (day/month/year) | Patent family member(s) | | | Publication date (day/month/year) |
|---|---|---|---|---|---|---|---|
| KR | 10-2014-0003511 | A | 09 January 2014 | CN | 103314474 | A | 18 September 2013 |
| | | | | CN | 103314474 | B | 26 October 2016 |
| | | | | EP | 2654111 | A1 | 23 October 2013 |
| | | | | EP | 2654111 | A4 | 13 August 2014 |
| | | | | EP | 2654111 | B1 | 18 April 2018 |
| | | | | JP | 2012-151106 | A | 09 August 2012 |
| | | | | JP | 5276158 | B2 | 28 August 2013 |
| | | | | KR | 10-1823187 | B1 | 29 January 2018 |
| | | | | TW | 201301641 | A | 01 January 2013 |
| | | | | TW | I466367 | B | 21 December 2014 |
| | | | | US | 2014-0017564 | A1 | 16 January 2014 |
| | | | | US | 9603245 | B2 | 21 March 2017 |
| | | | | WO | 2012-091060 | A1 | 05 July 2012 |
| KR | 10-2016-0134636 | A | 23 November 2016 | CN | 105453299 | A | 30 March 2016 |
| | | | | CN | 105453299 | B | 14 May 2019 |
| | | | | EP | 3121863 | A1 | 25 January 2017 |
| | | | | EP | 3121863 | A4 | 06 September 2017 |
| | | | | EP | 3121863 | B1 | 01 April 2020 |
| | | | | JP | 2016-181513 | A | 13 October 2016 |
| | | | | JP | 2016-184591 | A | 20 October 2016 |
| | | | | JP | 5725224 | B1 | 27 May 2015 |
| | | | | JP | 5962871 | B2 | 03 August 2016 |
| | | | | JP | 6477584 | B2 | 06 March 2019 |
| | | | | JP | 6572837 | B2 | 11 September 2019 |
| | | | | JP | WO2015-141448 | A1 | 06 April 2017 |
| | | | | KR | 10-2291416 | B1 | 20 August 2021 |
| | | | | US | 10141548 | B2 | 27 November 2018 |
| | | | | US | 2016-0172638 | A1 | 16 June 2016 |
| | | | | WO | 2015-141448 | A1 | 24 September 2015 |
| KR | 10-2021-0056073 | A | 18 May 2021 | CN | 113490770 | A | 08 October 2021 |
| | | | | EP | 3913115 | A1 | 24 November 2021 |
| | | | | EP | 4243145 | A2 | 13 September 2023 |
| | | | | EP | 4243145 | A3 | 08 November 2023 |
| | | | | JP | 2022-520487 | A | 30 March 2022 |
| | | | | JP | 7324297 | B2 | 09 August 2023 |
| | | | | TW | 202118905 | A | 16 May 2021 |
| | | | | TW | I762020 | B | 21 April 2022 |
| | | | | US | 2022-0119973 | A1 | 21 April 2022 |
| | | | | WO | 2021-091250 | A1 | 14 May 2021 |
| KR | 10-1669087 | B1 | 25 October 2016 | CN | 103348041 | A | 09 October 2013 |
| | | | | CN | 103348041 | B | 12 October 2016 |
| | | | | EP | 2660359 | A1 | 06 November 2013 |
| | | | | JP | 2013-028848 | A | 07 February 2013 |
| | | | | JP | 2013-095954 | A | 20 May 2013 |
| | | | | JP | 2013-185228 | A | 19 September 2013 |
| | | | | JP | 2013-204088 | A | 07 October 2013 |
| | | | | KR | 10-2013-0094821 | A | 26 August 2013 |
| | | | | KR | 10-2015-0097821 | A | 26 August 2015 |
| | | | | TW | 201323664 | A | 16 June 2013 |
| | | | | TW | I496954 | B | 21 August 2015 |

Form PCT/ISA/210 (patent family annex) (July 2022)

## INTERNATIONAL SEARCH REPORT
### Information on patent family members

International application No.

**PCT/KR2023/018615**

| Patent document cited in search report | | | Publication date (day/month/year) | Patent family member(s) | | | Publication date (day/month/year) |
|---|---|---|---|---|---|---|---|
| | | | | US | 2014-0045061 | A1 | 13 February 2014 |
| | | | | US | 9890463 | B2 | 13 February 2018 |
| | | | | WO | 2013-018773 | A1 | 07 February 2013 |
| US | 2016-0365545 | A1 | 15 December 2016 | CN | 106062991 | A | 26 October 2016 |
| | | | | CN | 106062991 | B | 05 February 2019 |
| | | | | CN | 110001149 | A | 12 July 2019 |
| | | | | CN | 110001149 | B | 11 December 2020 |
| | | | | DE | 112015000853 | B4 | 06 May 2021 |
| | | | | DE | 112015000853 | T5 | 10 November 2016 |
| | | | | JP | 2018-125306 | A | 09 August 2018 |
| | | | | JP | 2020-107608 | A | 09 July 2020 |
| | | | | JP | 6673396 | B2 | 25 March 2020 |
| | | | | JP | WO2015-125806 | A1 | 30 March 2017 |
| | | | | KR | 10-1841867 | B1 | 23 March 2018 |
| | | | | KR | 10-2016-0120312 | A | 17 October 2016 |
| | | | | US | 10020471 | B2 | 10 July 2018 |
| | | | | WO | 2015-125806 | A1 | 27 August 2015 |
| JP | 2012-212529 | A | 01 November 2012 | CN | 103460464 | A | 18 December 2013 |
| | | | | CN | 103460464 | B | 29 August 2017 |
| | | | | EP | 2693542 | A1 | 05 February 2014 |
| | | | | JP | 5074611 | B2 | 14 November 2012 |
| | | | | KR | 10-2013-0130860 | A | 02 December 2013 |
| | | | | MY | 164458 | A | 15 December 2017 |
| | | | | TW | 201246675 | A | 16 November 2012 |
| | | | | TW | I460915 | B | 11 November 2014 |
| | | | | US | 2014-0030591 | A1 | 30 January 2014 |
| | | | | WO | 2012-133564 | A1 | 04 October 2012 |
| KR | 10-1999-0076497 | A | 15 October 1999 | DE | 19841764 | A1 | 23 September 1999 |
| | | | | JP | 11-297753 | A | 29 October 1999 |
| | | | | JP | 11-330149 | A | 30 November 1999 |
| | | | | KR | 10-0780828 | B1 | 09 May 2008 |
| | | | | SG | 111958 | A1 | 29 June 2005 |
| | | | | SG | 77652 | A1 | 16 January 2001 |
| | | | | TW | 423123 | B | 21 February 2001 |
| | | | | US | 2001-0002066 | A1 | 31 May 2001 |
| | | | | US | 6297142 | B1 | 02 October 2001 |
| | | | | US | 6426548 | B1 | 30 July 2002 |
| | | | | US | 6433409 | B2 | 13 August 2002 |

Form PCT/ISA/210 (patent family annex) (July 2022)